# EUROPÄISCHE PATENTSCHRIFT

(11) **EP 4 399 958 B1**
(45) Veröffentlichungstag und Bekanntmachung des Hinweises auf die Patenterteilung: **29.10.2025**
(21) Anmeldenummer: 23213419.7
(22) Anmeldetag: 30.11.2023
(51) Int. Cl.: A01D 43/08

(54) **FELDHÄCKSLER MIT AUSWURFKRÜMMER**
FORAGE HARVESTER WITH DISCHARGE SPOUT
RAMASSEUSE-HACHEUSE DOTÉE D'UN COUDE D'ÉJECTION

(30) Priorität: 12.01.2023 DE 102023100635; 12.01.2023 DE 102023100636
(43) Veröffentlichungstag der Anmeldung: 17.07.2024
(73) Patentinhaber: CLAAS Saulgau GmbH, 88348 Bad Saulgau (DE)
(72) Erfinder: Holtkötter, Niklas, 59427 Unna (DE); Penner, Kai, 33619 Bielefeld (DE); Löffler, Niklas, 88367 Hohentengen (DE); Deufel, Tobias, 88605 Meßkirch-Menningen (DE); Bauknecht, Benjamin, 88356 Ostrach (DE)
(74) Vertreter: Budach, Steffen

(56) Entgegenhaltungen:
- EP-A1- 2 959 766
- EP-B1- 0 274 761
- EP-B1- 2 952 084
- DE-A1- 102017 220 148

## Beschreibung

Die Erfindung betrifft einen Feldhäcksler mit einem Auswurfkrümmer gemäß dem Oberbegriff des Anspruchs 1 und ein Verfahren zum Falten eines Auswurfkrümmers gemäß dem Oberbegriff des Anspruchs 9.

Ein Feldhäcksler mit einem klappbaren Auswurfkrümmer ist beispielsweise aus der EP 2 952 084 B1 bekannt. Die als Feldhäcksler ausgeführte selbstfahrende Erntemaschine umfasst einen Auswurfkrümmer, welcher um eine vertikale Drehachse drehbar an dem Feldhäcksler montiert ist, und mit einer Krümmerverlängerung, welche um eine Schwenkachse schwenkbar an einem der Erntemaschine abgewandten Längsende des Auswurfkrümmers montiert ist, so dass die Krümmerverlängerung um 180 Grad zwischen einer ausgeklappten Stellung, in der sich die Krümmerverlängerung als Längenfortsetzung des Auswurfkrümmers erstreckt, und einer eingeklappten Stellung verschwenkbar ist, in der die Krümmerverlängerung längsseits neben dem Auswurfkrümmer angeordnet ist. Zum Antreiben einer Schwenkbewegung der Krümmerverlängerung von der einen Stellung in die andere Stellung weist die Erntemaschine eine als Hydraulikzylinder ausgebildete Kolben-Zylinder-Einheit auf. Zusätzlich zu der sich vertikal erstreckenden Drehachse ist der Auswurfkrümmer um eine sich quer zu der Drehachse erstreckenden Schwenkachse verschwenkbeweglich angeordnet, sodass die Höhe des Auswurfendes des Krümmers und die der an dem Auswurfende montierten Krümmerverlängerung verstellbar ist.

Bekannterweise wird der Auswurfkrümmer bei einer Straßenfahrt oder beim Wechsel von einem Feldbestand zu einem anderen Feldbestand in eine Ablageposition verfahren. In der Ablageposition befindet sich die Krümmerverlängerung in eingeklappter Stellung und ist auf einem heckseitig an dem Feldhäcksler befindlichen Ablagebock abgelegt. Für den Ernteprozess wird der Auswurfkrümmer anschließend auf eine für den Ernteprozess vorgesehene Höhe verfahren und anschließend die Krümmerverlängerung in die ausgeklappte Stellung überführt.

Infolge der immer größeren Schneidwerkslängen sind für ein verlustfreies seitliches Überladen des von dem Feldhäcksler gehäckselten Erntegutes auf einen Transportwagen, wie beispielsweise einen Ladewagen, zunehmend länger ausgeführte Auswurfkrümmer erforderlich. Dies wird durch länger ausgeführte Krümmerverlängerungen erreicht. Hieraus ergibt sich der Nachteil, dass in der Ablageposition die Krümmerverlängerung höher nach oben ragt, wodurch sich das Fahrverhalten des Feldhäckslers verschlechtert oder die maximal zulässige Höhe für den Straßenverkehr überschritten wird.

Weiterhin ergibt sich durch die länger ausgeführten Krümmerverlängerungen der Nachteil, dass die Knickgelenke, welche die Achse zum Verschwenken der Krümmerverlängerung von der ausgeklappten Stellung hin zu der eingeklappten Stellung und umgekehrt bilden, deutlich stärkeren Kräften ausgesetzt sind und somit schneller verschleißen.

Es ist deshalb Aufgabe der Erfindung, die beschriebenen Nachteile des Standes der Technik zu vermeiden und insbesondere einen Auswurfkrümmer mit einer Krümmerverlängerung zu schaffen, die trotz langer Längserstreckung der Krümmerverlängerung im eingefalteten Zustand die für den Straßenverkehr zulässige Höhe nicht überschreitet und insbesondere ein Verfahren zum Falten eines Auswurfkrümmers zu schaffen, das ein automatisiertes und verschleißarmes Verschwenken der Krümmerverlängerung ermöglicht.

Diese Aufgabe wird erfindungsgemäß durch die kennzeichnenden Merkmale des Anspruchs 1 gelöst.

Gemäß Anspruch 1 wird ein Feldhäcksler mit einem Auswurfkrümmer vorgeschlagen, wobei der Auswurfkrümmer einen an dem Feldhäcksler um eine erste Achse verschwenkbeweglich angeordneten Krümmerstutzen und eine an dem Krümmerstutzen angeordnete erste Krümmerverlängerung umfasst, wobei die erste Krümmerverlängerung ein erstes Teilstück und ein an dem ersten Teilstück um eine zweite Achse verschwenkbeweglich angeordnetes zweites Teilstück umfasst, wobei in einer ausgeklappten Stellung das zweite Teilstück eine Längenfortsetzung des ersten Teilstücks bildet, wobei eine stirnseitige Kontaktfläche des ersten und zweiten Teilstücks in einer Ebene liegt, wobei die zweite Achse in einem Winkel geneigt gegenüber der Ebene ausgebildet ist.

Die Erfindung hat viele Vorteile. Der geteilte Auswurfkrümmer, bestehend aus dem Krümmerstutzen und der zweigeteilten Krümmerverlängerung, ermöglicht die Anpassung des Auswurfkrümmers an längere Schneidwerksbreiten. Das erste Teilstück bildet eine Längenfortsetzung das Krümmerstutzens und das zweite Teilstück eine Längenfortsetzung des ersten Teilstücks. Die Neigung der zweiten Achse bewirkt, dass beim Verschwenken des zweiten Teilstücks das zweite Teilstück auf der dem ersten Teilstück abgewandten Seite in der eingeklappten Stellung eine niedrigere Position aufweist. Hierdurch wird mit einfachen Mitteln erreicht, dass die für den Straßenverkehr maximal zulässige Höhe des Feldhäckslers in der eingeklappten Stellung der Krümmerverlängerung nicht überschritten wird.

Eine vorteilhafte Weiterbildung sieht vor, dass das zweite Teilstück von der ausgeklappten Stellung um die zweite Achse hin zu einer eingeklappten Stellung verschwenkbeweglich ist, wobei das zweite Teilstück in der eingeklappten Stellung sich längsseits neben dem ersten Teilstück befindet. In der eingeklappten Stellung kann das zweite Teilstück in einer horizontalen Ebene neben dem ersten Teilstück angeordnet sein, sodass sich ein besonders flacher Aufbau des Feldhäcksler ergibt. Zusätzlich kann die Neigung des Winkels eine niedrigere Position des freien Endes des zweiten Teilstücks in der zweiten Stellung bewirken. Der Scheitelpunkt des Winkels kann sich an der Oberseite des Auswurfkrümmers befinden, wobei sich ein zwischen der zweiten Achse und der Ebene ausbildendes Winkelfeld in Richtung der Unterseite des Auswurfkrümmers erstreckt und ausgehend von der Ebene in Richtung des zweiten Teilstücks erstreckt.

Gemäß einer vorteilhaften Ausgestaltung kann der Winkel größer als 1 Grad und kleiner als 5 Grad sein. Bei einem derartig ausgebildeten Winkel ist eine für den Straßenverkehr erforderliche Maximalhöhe auch für besonders lang ausgeführte Krümmerverlängerungen einhaltbar. Zugleich gewährleistet ein Winkel der größer als 1 Grad und kleiner als 5 Grad ist, dass das erste und zweite Teilstück der Krümmerverlängerung in der eingeklappten Stellung im Bereich eines heckseitig am Feldhäcksler befindlichen Ablagebocks eine parallel verlaufende Ablagefläche aufweisen, sodass beide Teilstücke in der Ablageposition auf dem Ablagebock abstützbar sind.

Vorzugsweise kann eine erste Montageplatte an dem ersten Teilstück und eine zweite Montageplatte an dem zweiten Teilstück angeordnet sein, wobei die erste und zweite Montageplatte mit einem ersten Gelenk verbunden sind, wobei das erste Gelenk die zweite Achse zum Verschwenken des zweiten Teilstücks ausbildet. Die auf das erste Gelenk wirkenden Kräfte sind mittels der flächig an der jeweiligen Seitenwand der Teilstücke anliegenden Montageplatte in die Struktur der Krümmerverlängerung einleitbar. Vorteilhaft ist es, wenn an dem ersten Gelenk eine Öse angeordnet ist. Die Öse kann zur Montage und Demontage der Krümmerverlängerung vorgesehen sein. Beispielsweise kann eine Kette eines Krans an der Öse befestigt werden. Für einen von dem Feldhäcksler losgelösten Transport ist die Position des ersten Gelenks zur Anordnung der Öse besonders vorteilhaft, da dieses besonders aufgrund der flächig an den Seitenwänden anliegenden Montageplatten besonders stabil ausgeführt ist und insbesondere in der zweiten Stellung die Krümmerverlängerung eine geringe Neigung zum Kippen um die Öse aufweist.

Gemäß dem Anspruch 9 wird ein Verfahren zum Falten eines Auswurfkrümmers eines Feldhäckslers vorgeschlagen, wobei der Auswurfkrümmer einen an dem Feldhäcksler um eine erste Achse verschwenkbeweglich angeordneten Krümmerstutzen und eine an dem Krümmerstutzen angeordnete Krümmerverlängerung umfasst, wobei die Krümmerverlängerung ein erstes Teilstück und ein an dem ersten Teilstück um eine zweite Achse verschwenkbeweglich angeordnetes zweites Teilstück umfasst, wobei der Auswurfkrümmer zwischen einer Ablageposition und einer Ernteposition verfahrbar ist, wobei eine zwischen der Ablageposition und der Ernteposition befindliche Faltposition vorgesehen ist, wobei in der Faltposition die Krümmerverlängerung von einer eingeklappten Stellung in eine ausgeklappte Stellung oder von der ausgeklappten Stellung in die eingeklappte Stellung verfahren wird.

Die Erfindung hat viele Vorteile. Die Erfindung hat erkannt, dass in der für den Erntevorgang vorgesehenen Position sich die Höhe des Auswurfkrümmers und die damit verbundene Ausrichtung der zweiten Achse zu einer ungleichmäßigen Belastung des die zweite Achse bildenden Schwenkgelenks führt. Ein Faltvorgang der Krümmerverlängerung von einer ausgeklappten Stellung hin zu einer eingeklappten Stellung und umgekehrt in einer unterhalb der Ernteposition befindlichen Höhe führt zu einer gleichmäßigeren Belastung des Schwenkgelenks, sodass dieses bei einem Faltvorgang in der Faltposition geringeren mechanischen Belastungen ausgesetzt ist und somit im geringeren Ausmaß verschleißt.

Eine vorteilhafte Weiterbildung sieht vor, dass die zweite Achse sich in der Faltposition in vertikaler Richtung erstreckt. In dieser Position ergibt sich eine besonders gleichmäßige Kräfte- und Momentverteilung der an dem Schwenkgelenk wirkenden mechanischen Kräfte, sodass diese Position besonders vorteilhaft für einen Verschwenkvorgang der Krümmerverlängerung ist.

Eine weitere vorteilhafte Weiterbildung sieht vor, dass der Feldhäcksler einen Ablagebock zum Abstützen des Auswurfkrümmers in der Ablageposition umfasst, wobei sich der Auswurfkrümmer in der Faltposition oberhalb des Ablagebocks befindet, wobei vorzugsweise der Krümmerstutzen in der Faltposition im Wesentlichen parallel zur Vorwärtsfahrtrichtung des Feldhäckslers ausgerichtet ist. Durch das Ablegen des Auswurfkrümmer auf dem Ablagebock können die Hubzylinder sowie Schwenkachsen um die der Auswurfkrümmer verschwenkbar an dem Feldhäcksler angeordnet ist entlastet werden. Ferner wird der Auswurfkrümmer in der Ablageposition gegenüber der Ernteposition vermindert zum Schwingen angeregt, sodass sich ein angenehmeres Fahrverhalten des Feldhäckslers ergibt.

Vorzugsweise kann ein Betätigungsmittel, insbesondere ein Schaltelement, vorgesehen sein, wobei mittels des Betätigungsmittels eine Automatikfunktion zum automatischen Verschwenken des Auswurfkrümmers betätigbar ist. Für einen Bediener ist es somit ausreichend zum Verschwenken des Auswurfkrümmers die Automatikfunktion zu betätigen.

Um ein automatisches Verfahren des Auswurfkrümmers von der Ernteposition hin zu der Ablageposition zu ermöglichen, ist es besonders bevorzugt, wenn die Automatikfunktion die folgenden Verfahrensschritte umfasst:
a) Verfahren des Auswurfkrümmers in eine oberhalb eines Ablagebocks befindliche Position,
b) Absenken des Auswurfkrümmers in die Faltposition,
c) Verschwenken der Krümmerverlängerung von einer ausgeklappten Stellung in eine eingeklappte Stellung, wobei vorzugsweise während des Verschwenkens der Krümmerverlängerung eine am freien Ende der Krümmerverlängerung befindliche Auswurfklappe in eine für die Ablageposition des Auswurfkrümmers vorgesehene Stellung verfahren wird,
d) Absenken des Auswurfkrümmers in die Ablageposition, wobei der Auswurfkrümmer auf dem Ablagebock positioniert wird, wobei vorzugsweise der Auswurfkrümmer angewinkelt zur Vorwärtsfahrtrichtung auf dem Ablagebock positioniert wird.

Um ein automatisches Verfahren des Auswurfkrümmers von der Ablageposition hin zu der Ernteposition zu ermöglichen, ist es besonders vorteilhaft, wenn die Automatikfunktion die folgenden Verfahrensschritte umfasst:
1) Anheben des Auswurfkrümmers in die Faltposition.
2) Verschwenken der Krümmerverlängerung von der eingeklappten Stellung in eine ausgeklappte Stellung, wobei vorzugsweise während des Verschwenkens der Krümmerverlängerung die am freien Ende der Krümmerverlängerung befindliche Auswurfklappe in eine für die Ernteposition des Auswurfkrümmers vorgesehen Stellung verfahren wird,
3) Anheben des Auswurfkrümmers in die Ernteposition.

Eine vorteilhafte Ausgestaltung sieht vor, dass die Automatikfunktion auf einfache Art und Weise durch Tippen des Betätigungsmittels betätigt wird.

Gemäß einer vorteilhaften Weiterbildung kann das Betätigungsmittel zusätzlich zum manuellen Verschwenken der Krümmerverlängerung um die zweite Achse vorgesehen und eingerichtet sein, wobei durch halten des Betätigungsmittels die Krümmerverlängerung manuell verschwenkt wird.

Um auch bei einem Verfahren der Stellung des Auswurfkrümmers auf unebenen Untergrund eine optimale Faltposition angesteuert wird, kann der Feldhäcksler einen Neigungssensor umfassen, wobei die Faltposition in Abhängigkeit einer Neigung der Erntemaschine ermittelt wird.

Um die jeweilige Stellung der Krümmerverlängerung zu identifizieren, kann der Auswurfkrümmer zumindest einen ersten Sensor und einen zweiten Sensor umfassen, wobei vorzugsweise die eingeklappte Stellung der Krümmerverlängerung mittels des ersten Sensors und die ausgeklappte Stellung mittels des zweiten Sensors identifiziert wird. Weiterhin kann der Feldhäcksler eine Steuerungseinrichtung umfassen, wobei die Steuerungseinrichtung zum Identifizieren der an dem Krümmerstutzen montierten Krümmerverlängerung mit einem verschwenkbeweglichen zweiten Teilstück vorgesehen und eingerichtet ist, wobei vorzugsweise die Steuerungseinrichtung den ersten und/oder zweiten Sensor mittels eines Spannungssignals identifiziert und diesem einer Krümmerverlängerung mit einem verschwenkbeweglichen zweiten Teilstück zuordnet. Das automatische Identifizieren der an den Krümmerstutzen angerordneten Krümmerverlängerung mit einem verschwenkbaren zweiten Teilstück ist besonders vorteilhaft, da mittels der Steuerungseinrichtung somit feststellbar ist, ob ein Ansteuern der Faltposition und das Verfahren der Stellung der Krümmerverlängerung von einer eingeklappten Stellung hin zu der ausgeklappten Stellung und umgekehrt erforderlich ist. Insofern keine verschwenkbare Krümmerverlängerung an dem Krümmerstutzen angeordnet ist, kann somit der Krümmerstutzen unmittelbar von der Ablageposition in die Ernteposition und umgekehrt überführt werden.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Seitenansicht eines Feldhäckslers mit einem Auswurfkrümmer, wobei sich eine Krümmerverlängerung in einer ersten Stellung befindet;
- Figur 2: eine schematische Seitenansicht eines Feldhäckslers mit einem Auswurfkrümmer mit einer in einer zweiten Stellung befindlichen Krümmerverlängerung;
- Figur 3: eine schematische Teilansicht eines ersten Teilstücks der Krümmerverlängerung;
- Figur 4: eine perspektivische Ansicht eines ersten Gelenks zum Verschwenken eines zweiten Teilstücks relativ zu einem ersten Teilstück der Krümmerverlängerung;
- Figur 5: eine schematische Ansicht eines Feldhäckslers, wobei die Krümmerverlängerung in verschiedenen Stellungen abgebildet ist;
- Figur 6: eine schematische Seitenansicht eines Feldhäckslers mit verschiedenen Positionen des Auswurfkrümmers;
- Figur 7: eine schematische Draufsicht eines Feldhäckslers mit einem in einer Faltposition befindlichen Auswurfkrümmer.

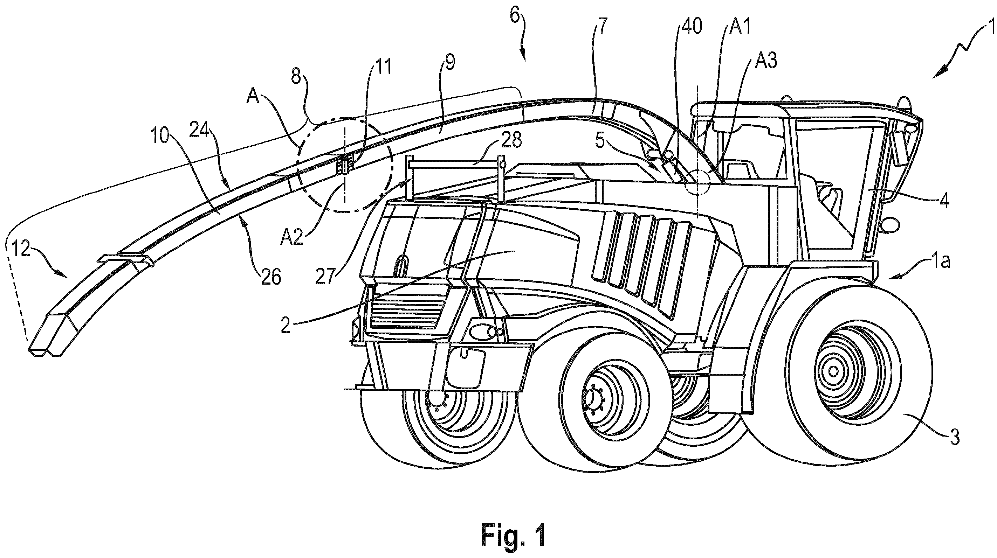

Figur 1 zeigt schematisch eine als Feldhäcksler 1 ausgebildete Erntemaschine in einer Seitenansicht. Ein Maschinengehäuse 2 des Feldhäckslers 1 enthält einen Motor (nicht gezeigt) zum Antreiben von Rädern 3 sowie einen an der Frontseite 1a des Feldhäckslers 1 montierbaren Erntevorsatz (nicht gezeigt). Mit Hilfe des Erntevorsatzes vom Boden aufgenommenes Erntegut wird in einer im Innern des Maschinengehäuses 2 angeordneten Häckseltrommel (nicht gezeigt) zerkleinert und in einen hinter einer Fahrerkabine 4 aufsteigenden Auswurfschacht (nicht gezeigt) ausgegeben. Ein ebenfalls an dem Auswurfschacht im Innern des Maschinengehäuses 2 angeordneter Nachbeschleuniger (nicht gezeigt) schleudert das gehäckselte Erntegut durch einen auf einem Drehkranz 5 an der Oberseite des Maschinengehäuses 2 drehbeweglich montierten Auswurfkrümmer 6. Der Auswurfkrümmer 6 bildet eine Überladevorrichtung zum Überladen von Erntegut auf ein Transportfahrzeug.

Der Auswurfkrümmer 6 umfasst einen Krümmerstutzen 7 und eine an dem Krümmerstutzen 7 angeordnete erste Krümmerverlängerung 8. Der Krümmerstutzen 7 ist mit einem ersten Längsende um eine vertikale erste Drehachse A1 drehbeweglich am Drehkranz 5 des Feldhäckslers 1 angeordnet. Ferner ist der Krümmerstutzen 7 um eine sich quer zur ersten Drehachse A1 und in einer im bestimmungsgemäßen Betriebszustand des Feldhäckslers 1 im Wesentlichen in horizontaler Ebene erstreckenden dritten Achse A3 verschwenkbeweglich angeordnet. Mittels einer Schwenkbewegung des Krümmerstutzens 7 um die dritte Achse A3 ist die Höhe des dem Feldhäcksler 1 abgewandten Endes des Krümmerstutzen 7 und die Höhe der an dem Krümmerstutzen 7 angeordneten ersten Krümmerverlängerung 8 einstellbar. Zum Verschwenken um die dritte Achse umfasst der Feldhäcksler eine Kolbenzylindereinheit 40, die vorzugsweise zwischen dem Krümmerstutzen 7 und dem Drehkranz 5 angeordnet ist und mittels einer Steuerungseinrichtung 48 ansteuerbar ist. Die erste Krümmerverlängerung 8 umfasst ein erstes Teilstück 9 und ein zweites Teilstück 10. Die Teilstücke 9, 10 und der Krümmerstutzen 7 sind kanalförmig mit einem rechteckigen Profil ausgebildet, sodass das gehäckselte Erntegut durch diese hindurch beförderbar ist. Das erste Teilstück 9 ist ortsfest an dem den Feldhäcksler 1 abgewandten Ende des Krümmerstutzens 7 beispielsweise mittels einer Schraubverbindung angeordnet und bildet eine Längenfortsetzung des Krümmerstutzen 7 aus. Das zweite Teilstück 10 ist an dem freien Längsende des ersten Teilstücks 9 mittels eines ersten Gelenks 11 schwenkbar angeordnet.

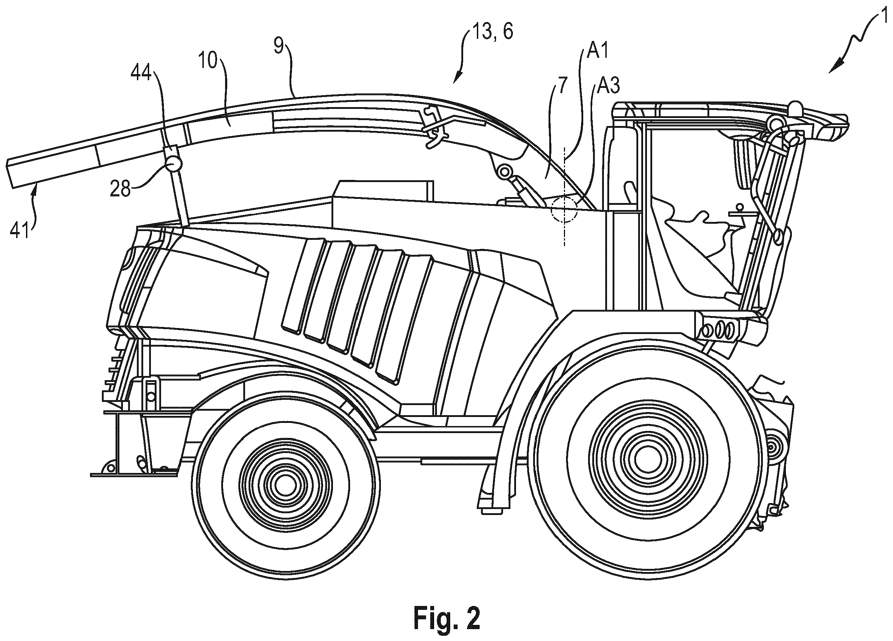

Das erste Gelenk 11 stellt eine noch näher zu erläuternde zweite Achse A2 bereit, so dass die erste Krümmerverlängerung 8 um die zweite Achse A2 zwischen einer in Fig. 1 gezeigten ausgeklappten Stellung 12, in der sich das zweite Teilstück 10 als Längenfortsetzung des ersten Teilstücks 9 erstreckt, und einer in Fig. 2 gezeigten eingeklappten Stellung 13 verschwenkbar ist, in der sich das zweite Teilstück 10 längsseits neben dem ersten Teilstück 9 befindet.

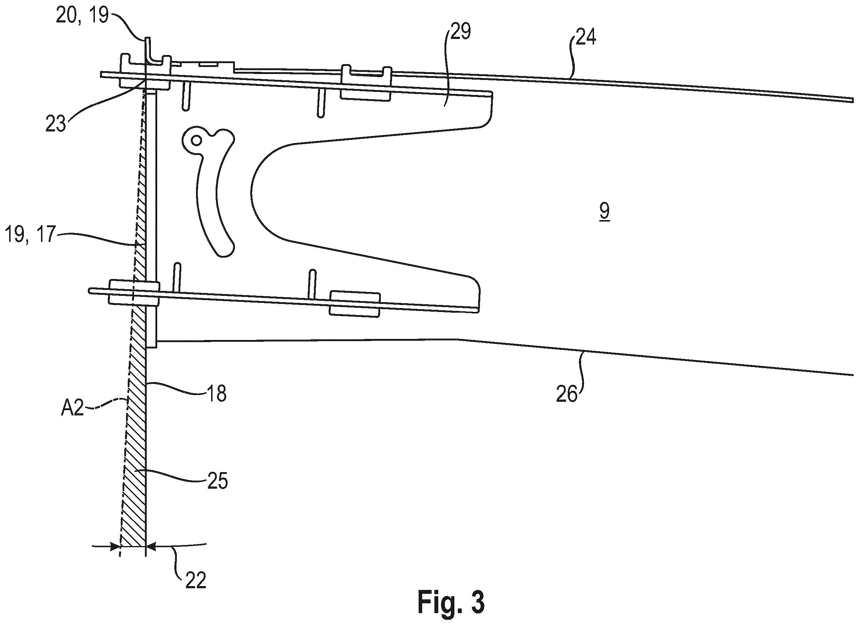

In Fig. 3 ist das dem zweiten Teilstück 10 zugewandte Ende des ersten Teilstücks 9 mit der gestrichelt dargestellten zweiten Achse A2 schematisch abgebildet. Die Stirnseite 17 des kanalförmigen ersten Teilstücks 9 weist in der ausgeklappten Stellung 12 mit einer Stirnseite des zweiten Teilstücks 10 eine in einer gemeinsamen Ebene 18 liegende Kontaktfläche 19 auf. Hierfür umfasst die Stirnseite 17 des ersten Teilstücks 9 zumindest einen ersten Flansch 20 und die Stirnseite des zweiten Teilstücks 10 zumindest einen zweiten Flansch 21. Der erste und zweite Flansch 20, 21 stehen in der ersten Stellung 11 einander berührend gegenüber und bilden zumindest einen Abschnitt der Kontaktfläche 19. Die zweite Achse A2 ist in einem Winkel 22 geneigt gegenüber der Ebene 18 ausgebildet. Diese Neigung bewirkt, dass in der eingeklappten Stellung 13 das freie Ende bzw. das dem ersten Teilstück 9 abgewandte Ende des zweiten Teilstücks 10 eine niedrigere Position gegenüber einer ersten Krümmerverlängerung 8 mit einer in der Ebene 18 befindliche zweiten Achse A2 aufweist. Mit anderen Worten ist das freie Ende des zweiten Teilstücks 10 in der zweiten Stellung durch die Neigung der zweiten Achse A2 zu der Ebene 18 dem Maschinengehäuse 2 des Feldhäckslers 1 angenähert.

Der Scheitelpunkt 23 des Winkels 22 befindet sich obenseitig am Auswurfkrümmers 6. Als Oberseite 24 ist hier die dem Maschinengehäuse 2 des Feldhäckslers 1 abgewandte Seite des Auswurfkrümmers 6 zu verstehen. Zwischen der zweiten Achse A2 und der Ebene 18 erstreckt sich das resultierende Winkelfeld 25 in Richtung der Unterseite 26 des Auswurfkrümmers 6. Als Unterseite 26 des Auswurfkrümmers 6 ist hier die dem Maschinengehäuse 2 zugewandte Seite des Auswurfkrümmers 6 zu verstehen. Weiterhin ist das Winkelfeld 25 orthogonal zu der Ebene 18 ausgerichtet und erstreckt sich ausgehend von der Ebene 18 in Richtung des zweiten Teilstücks 10.

Bei einer Straßenfahrt oder beim Wechsel von einem Feldbestand zu einem anderen Feldbestand wird der Auswurfkrümmer 6 in eine in Fig. 2 schematisch dargestellte Ablageposition 41 verfahren. In der Ablageposition 41 befindet sich die erste Krümmerverlängerung 8 in der eingeklappten Stellung 13 und ist auf einem heckseitig an dem Feldhäcksler 1 befindlichen Ablagebock 27 abgelegt. Hierfür umfasst der Ablagebock 27 eine sich quer zur Vorwärtsfahrtrichtung FR erstreckende Strebe 28 die ein Auflageelement für den Auswurfkrümmer 6 bildet. An den Stirnseiten der Strebe 28 erstrecken sich in vertikaler Richtung seitliche Abstützelemente 44 nach oben, die ein seitliches Herunterrutschen des Auswurfkrümmers 6 von der Strebe 28 verhindern. Hier und vorzugsweise ist der Winkel 22 größer als 1 Grad und kleiner als 5 Grad ausgebildet. Bei einem derartig ausgebildeten Winkel 22 ist eine für den Straßenverkehr erforderliche Maximalhöhe auch für besonders lang ausgeführte erste Krümmerverlängerungen 8 einhaltbar, wobei zugleich in der Ablageposition sowohl das erste Teilstück 9 als auch das zweite Teilstück 10 auf dem Ablagebock 27 ablegbar sind.

Weiterhin ist anstatt der ersten Krümmerverlängerung 8 eine hier nicht näher dargestellte zweite Krümmerverlängerung an den Krümmerstutzen montierbar. Die erste Krümmerverlängerung 8 weist in ihrer ausgeklappten Stellung 12 eine größere Längserstreckung als die zweite Krümmerverlängerung auf. Ferner unterscheidet sich die zweite Krümmerverlängerung von der ersten Krümmerverlängerung 8 durch den Winkel 22 der zweiten Achse A2 gegenüber der Ebene 18. Die Neigung des Winkels 22 ist abhängig von der Längserstreckung der Krümmerverlängerung. Insbesondere kann der Winkel der zweiten Krümmerverlängerung kleiner als der Winkel 22 der zweiten Krümmerverlängerung ausgeführt sein. Darüber hinaus unterscheiden sich die erste und zweite Krümmerverlängerung 8 lediglich durch den Radius der sich in Längsrichtung des jeweiligen Auswurfkrümmers 8 erstreckenden Bogenform.

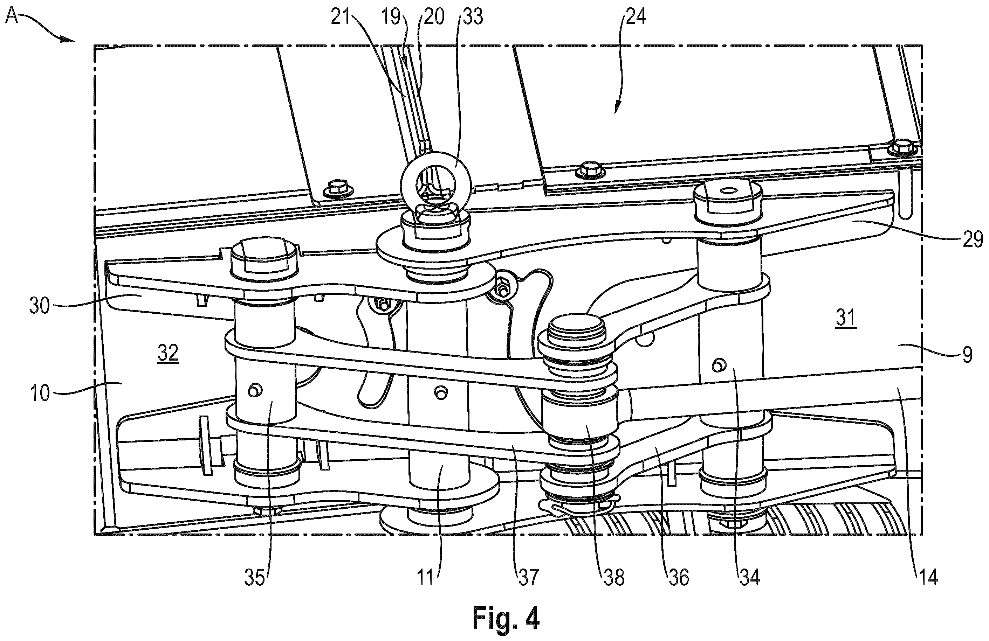

Fig. 4 zeigt den in Fig. 1 dargestellten Ausschnitt A im Detail. Wie Fig. 4 zeigt, umfasst die erste Krümmerverlängerung 8 zur Ausbildung der zweiten Achse A2 eine erste Montageplatte 29 und eine zweite Montageplatte 30. Die erste Montageplatte 29 ist an einer sich zwischen der Oberseite 24 und der Unterseite 26 des Auswurfkrümmers 6 erstreckenden Seitenwand 31 des ersten Teilstücks 9 angeordnet. Die zweite Montageplatte 30 ist an einer sich zwischen der Oberseite 24 und der Unterseite 26 des Auswurfkrümmers 6 erstreckenden Seitenwand 32 des zweiten Teilstücks 10 angeordnet. Die erste und zweite Montageplatte 29, 30 sind mit dem ersten Gelenk 11 verbunden, welches die zweite Achse A2 bildet. Die erste und zweite Montageplatte 29, 30 sind derart an der jeweiligen Seitenwand 31, 32 angeordnet, sodass sich der geneigte Winkel 22 der zweiten Achse A2 zu der Ebene 18 einstellt.

Hier und vorzugsweise ist an dem ersten Gelenk 11 an der der Oberseite 24 des Auswurfkrümmers 6 zugewandten Seite eine Öse 33 angeordnet. Die Öse 33 ist zur Montage und Demontage der ersten Krümmerverlängerung 8 vorgesehen und eingerichtet. Beispielsweise kann eine Kette eines Krans an der Öse 33 befestigt werden. Für einen von dem Feldhäcksler 1 losgelösten Transport ist die Position des ersten Gelenks 11 zur Anordnung der Öse 33 besonders vorteilhaft, da dieses besonders Stabil ausgeführt ist und insbesondere in der eingeklappten Stellung 13 die Krümmerverlängerung 8 eine geringe Neigung zum Kippen um eine derartig platzierte Öse 33 aufweist.

Weiterhin umfasst die erste Montageplatte 29 ein zweites Gelenk 34 und die zweite Montageplatte 30 ein drittes Gelenk 35. An dem zweiten Gelenk 34 ist ein erster Hebel 36 und an dem dritten Gelenk 35 ein zweiter Hebel 37 angeordnet, wobei der erste und zweite Hebel 36, 37 mit einem vierten Gelenk 38 verbunden sind, wobei ein als Kolbenzylindereinheit ausgeführter Aktor 14 an dem vierten Gelenk 38 zum Verschwenken des zweiten Teilstücks 10 um die zweite Achse A2 angeordnet ist. Das erste, zweite, dritte und vierte Gelenk 11, 34, 35, 38 bilden ein Viergelenk aus, welches einen kollisionsfreien und langlebigen Verschwenkmechanismus zum Verschwenken des zweiten Teilstücks 10 bereitstellt.

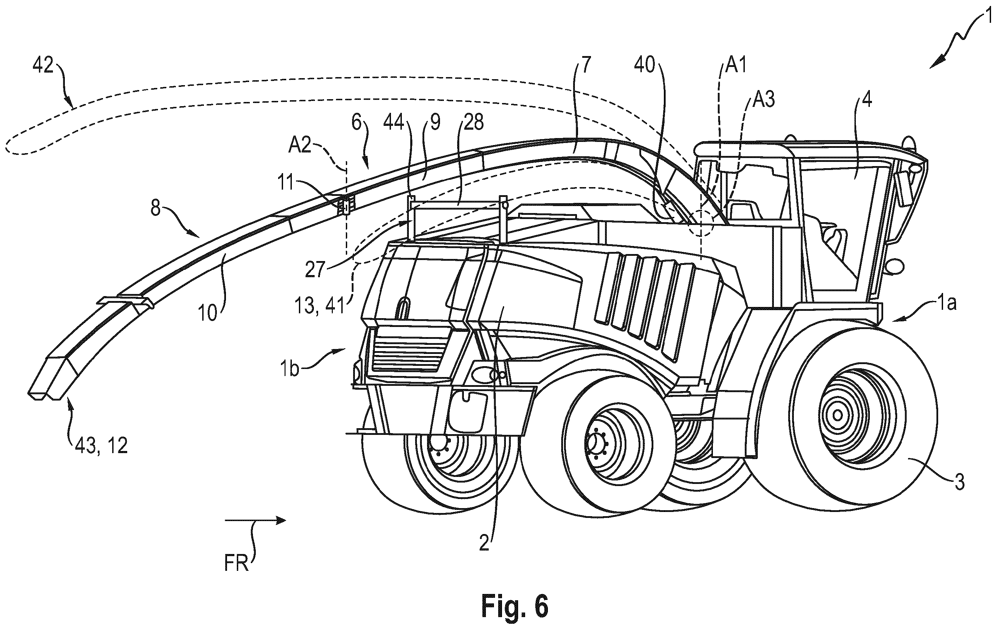

Bei einem Ernteprozess befindet sich der Auswurfkrümmer 6 in einer in Fig. 6 gestrichelt dargestellten Ernteposition 42. In der Ernteposition 42 ist der Krümmerstutzen 7 um die dritte Achse A3 auf seine maximal einstellbare Höhe verschwenkt und die Krümmerverlängerung 8 befindet sich in der ausgeklappten Stellung 12, wobei diese sich als Längenfortsetzung des Krümmerstutzens 7 erstreckt. Die Ernteposition 42 ist im Sinne der vorliegenden Patentanmeldung unabhängig von dem eingestellten Drehwinkel des Krümmerstutzens 7 um die Drehachse A1.

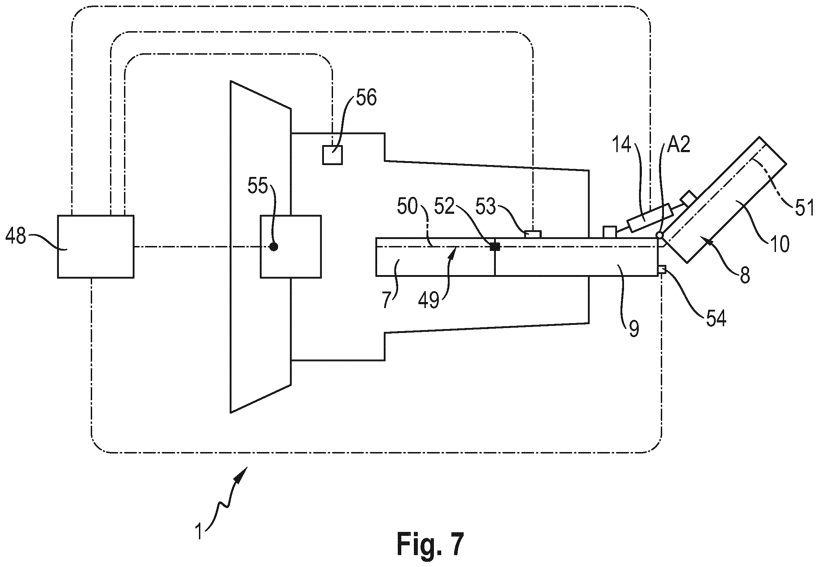

Für einen Ernteprozess wird der Auswurfkrümmer 6 in noch näher zu erläuternder Weise ausgehend von der Ablageposition 41 hin zu der Ernteposition 42 verfahren. Hierfür umfasst der Feldhäcksler 1 eine in Fig. 7 schematisch dargestellte Steuerungseinrichtung 48. In der Steuerungseinrichtung 48 ist eine in Fig. 6 dargestellte Faltposition 43 hinterlegt, die zum Verfahren der Krümmerverlängerung 8 von der eingeklappten Stellung 13 hin zu der ausgeklappten Stellung 13 und zum Verfahren der Krümmerverlängerung 8 von der ausgeklappten Stellung 12 hin zu der eingeklappten Stellung 13 vorgesehen ist. Wesentlich ist, dass sich der Krümmerstutzen 7 in der Faltposition 43 höhenmäßig zwischen der Ablageposition 41 und der Ernteposition 42 befindet. Mit anderen Worten befindet sich der Krümmerstutzen 7 in einer zwischen der Ernteposition 42 und der Ablageposition 41 befindlichen Höhe. Dem liegt die Erkenntnis zugrunde, dass auf das die zweite Achse A2 bildendes erstes Gelenk 11 in der Ernteposition 42 beim Verschwenken der Krümmerverlängerung 8 besonders große Kräfte und Momente wirken und somit verstärkt Verschleißerscheinungen bewirken. Eine deutlich gleichmäßigere Belastung beim Verschwenken der Krümmerverlängerung 8 wirkt in der zuvor beschriebenen Faltposition 43. Mithin wird die Langlebigkeit des erste Gelenk 11 durch das Anfahren der Faltposition 43 erhöht.

Hier und Vorzugsweise erstreckt sich die zweite Achse A2 in der Faltposition 43 in vertikaler Richtung. In dieser Stellung ergibt sich eine besonders gleichmäßige Moment- und Kräfteverteilung an dem ersten Gelenk 11.

Ferner befindet sich der Auswurfkrümmer 6 in der Faltposition 43 oberhalb des Ablagebocks 27, so dass dieser nach einem Verfahren in die eingeklappte Stellung 13 lediglich durch ein Verschwenken um die dritte Drehachse A3 auf dem Ablagebock 27 ablegbar ist. Ein Einklappen bzw. Ausklappen der Krümmerverlängerung 8 in dieser Position verhindert, dass Kollisionen mit seitlich neben dem Feldhäcksler 1 befindlichen Gegenständen auftreten. In der Faltposition 43 ragt der Auswurfkrümmer 6 zumindest in der ausgeklappten Stellung 12 der Krümmerverlängerung 8 über die Heckseite 1b des Feldhäckslers 1 hinaus. Der Krümmerstutzen 7 ist in der Faltposition 43 im Wesentlichen parallel zur Vorwärtsfahrtrichtung FR des Feldhäckslers 1 ausgerichtet.

Ferner umfasst der Auswurfkrümmer 6 eine in Fig. 7 schematisch dargestellte Kabelanordnung 49. Die Kabelanordnung 49 ist dazu vorgesehen und eingerichtet die an sich bekannten und hier nicht weiter erläuterten elektrischen Komponenten (nicht dargestellt) der Krümmerverlängerung 8 mit dem internen Stromnetz und/oder der Steuerungseinrichtung 48 des Feldhäckslers 1 zu verbinden. Die Kabelanordnung 49 umfasst einen ersten Kabelsatz 50, der an dem Krümmerstutzen 7 angeordnet ist und sich in axialer Richtung entlang des Krümmerstutzens 7 erstreckt. Weiterhin umfasst die Kabelanordnung 49 einen zweiten Kabelsatz 51, der an der Krümmerverlängerung 8 angeordnet ist und sich in axialer Richtung entlang der Krümmerverlängerung 8 erstreckt. Der erste Kabelsatz 50 und der zweite Kabelsatz 51 sind mit einer (nicht näher dargestellten) Steckverbindung 52 gekoppelt.

Weiterhin umfasst der Auswurfkrümmer 6 zumindest einen ersten Sensor 53 und einen zweiten Sensor 54 zum Identifizieren der Stellung der Krümmerverlängerung 8, wobei die eingeklappte Stellung 13 der Krümmerverlängerung 8 mittels des ersten Sensors 53 und die ausgeklappte Stellung 12 mittels des zweiten Sensors 54 identifiziert wird.

In der Fahrerkabine 4 des Feldhäckslers 1 ist ein als Schaltelement ausgebildetes Betätigungsmittel 55 vorgesehen. Das Betätigungsmittel 55 kann sowohl als ein herkömmliches Schaltelement, insbesondere ein physisch betätigbarer Schalter oder Knopf, aber auch als ein digitales Schaltelement ausgebildet sein. Das Betätigungsmittel 55 ist in signalübertragender Weise mit der Steuerungseinrichtung 48 verbunden. Die Steuerungseinrichtung 48 ist dazu vorgesehen und eingerichtet den Aktor 14 anzusteuern. Mittels des Betätigungsmittels 55 ist eine Automatikfunktion zum automatischen Verschwenken des Auswurfkrümmers 6 betätigbar. Die Automatikfunktion wird durch einmaliges Tippen auf das Betätigungsmittel 55 aktiviert. Die Automatikfunktion ist dazu vorgesehen und eingerichtet den Auswurfkrümmer 6 von der eingeklappten Stellung 13 in die ausgeklappte Stellung 12 oder von der ausgeklappten Stellung 12 in die eingeklappte Stellung 13 zu verfahren.

Wenn sich der Auswurfkrümmer 6 in der Ernteposition 42 befindet, wird bei einer Aktivierung der Automatikfunktion der Auswurfkrümmer 6 in die Ablageposition 41 verfahren. Hierfür werden im Rahmen des Ablaufs der Automatikfunktion die folgenden Verfahrensschritte durchgeführt:
a) Insofern der Auswurfkrümmer 6 um die von dem Drehkranz ausgebildete vertikale Drehachse bzw. erste Achse A1 derart verdreht ist, sodass der Auswurfkrümmer 6 sich nicht heckseitig über den Feldhäcksler 1 hinaus erstreckt, wird der Auswurfkrümmer 6 um die erste Drehachse A1 in eine oberhalb eines Ablagebocks 27 befindliche Position verdreht,
b) Im nächsten Schritt wird der Auswurfkrümmer 6 ausgehend von der für die Ernteposition 42 vorgesehenen Höhe in die zuvor näher beschriebene Faltposition 43 abgesenkt,
c) Im dritten Schritt wird, wie in Fig. 7 gezeigt, die Krümmerverlängerung 8 von der ausgeklappten Stellung 12 in die eingeklappte Stellung 13 verschwenkt, wobei während des Verschwenkens der Krümmerverlängerung 8 eine am freien Ende der Krümmerverlängerung 8 befindliche, an sich bekannte und hier nicht dargestellte Auswurfklappe in eine für die Ablageposition 41 des Auswurfkrümmers 8 vorgesehen Stellung verfahren. In der für die Ablageposition 11 vorgesehenen Stellung der Auswurfklappe wird eine Kollision mit etwaigen Komponenten des Feldhäckslers 1 vermieden. Das Verfahren der Auswurfklappe erfolgt während des Verschwenkens der Krümmerverlängerung 8, um einen zeitlich optimierten Ablauf zu erreichen.
d) Im letzten Schritt wird der Auswurfkrümmer 6 ausgehend von der Faltposition 43 in die Ablageposition 41 abgesenkt, wobei der Auswurfkrümmer 6 auf dem Ablagebock 27 positioniert wird. Wie in Fig. 2 gezeigt, kann zum Positionieren des Auswurfkrümmers 6 auf dem Ablagebock 27 vorgesehen sein, dass in Abhängigkeit der Ausmaße der Krümmerverlängerung 8, insbesondere der Breite der Krümmerverlängerung 8, der Auswurfkrümmer 6 angewinkelt zur Vorwärtsfahrtrichtung FR auf dem Ablagebock 27 positioniert wird.

Wenn sich der Auswurfkrümmer 6 in der Ablageposition 41 befindet, wird bei einer Aktivierung der Automatikfunktion der Auswurfkrümmers 6 in die Ernteposition 42 verfahren. Hierfür werden im Rahmen des Ablaufs der Automatikfunktion die folgenden Verfahrensschritte durchgeführt:
1) Der Auswurfkrümmer 6 wird aus dem Ablagebock 27 heraus bis in die Faltposition 43 angehoben,
2) Im nächsten Schritt wird die Krümmerverlängerung 8 von der eingeklappten Stellung 13 in die ausgeklappte Stellung 12 verfahren, wobei während des Verschwenkens der Krümmerverlängerung 8 die am freien Ende der Krümmerverlängerung 8 befindliche Auswurfklappe in eine für die Ernteposition 42 des Auswurfkrümmers 6 vorgesehen Stellung verfahren wird,
3) Im letzten Schritt wird der Auswurfkrümmer 6 ausgehend von der Faltposition 43 in die Ernteposition 42 angehoben.

Hier und vorzugsweise ist das Betätigungsmittel 55 zusätzlich zum manuellen Verschwenken der Krümmerverlängerung 8 um die zweite Achse A2 vorgesehen und eingerichtet, wobei während das Betätigungsmittel 55 gehalten wird, die Steuerungseinrichtung 48 den Aktor 14 zum Verschwenken der Krümmerverlängerung 8 ansteuert. Hierbei wird, wenn sich die Krümmerverlängerung 8 in der ausgeklappten Stellung 12 befindet, der Aktor 14 mittels der Steuerungseinrichtung 48 zum Verschwenken der Krümmerverlängerung 8 hin zu der eingeklappten Stellung 13 angesteuert. Ferner wird, wenn sich die Krümmerverlängerung 8 in der eingeklappten Stellung 13 befindet, der Aktor 14 mittels der Steuerungseinrichtung 48 zum Verschwenken der Krümmerverlängerung 8 hin zu der ausklappten Stellung angesteuert. Als Halten des Betätigungsmittels 55 kann hier und vorzugsweise eine Betätigung des Betätigungsmittels 55 mit einer Dauer von mindestens 2 Sekunden angesehen werden. Weiterhin kann als Tippen hier und vorzugsweise eine Betätigung des Betätigungsmittels 55 mit einer Dauer von maximal 2 Sekunden angesehen werden.

Damit auch bei einer Schräglage des Feldhäckslers 1 eine Faltposition 43 angefahren wird, in der die zweite Achse A2 vertikal ausgerichtet ist, umfasst der Feldhäcksler 1 einen Neigungssensor 56 zum Ermitteln einer Neigung des Feldhäckslers 1. Der Neigungssensor 56 ist in signalübertragender Weise mit der Steuerungseinrichtung 48 verbunden. Die Steuerungseinrichtung 48 ist derart eingerichtet, sodass diese anhand der Schräglage die Faltposition 43 ermittelt und für ein Verfahren der Krümmerverlängerung 8 vorsieht, in der die zweite Achse auch bei einer Neigung des Feldhäckslers 1 vertikal ausgerichtet ist.

Als vertikale Richtung ist im Sinne der vorliegenden Anmeldung die Richtung zu verstehen, in die die Erdanziehungskraft wirkt.

Weiterhin ist die die Steuerungseinrichtung 48 zum Identifizieren der an dem Krümmerstutzen 7 montierten Krümmerverlängerung 8 mit dem verschwenkbeweglichen zweiten Teilstück 10 vorgesehen und eingerichtet ist, wobei die Steuerungseinrichtung 48 den ersten und/oder zweiten Sensor 53, 54 mittels eines Spannungssignals identifiziert und diesem der Krümmerverlängerung 8 mit einem verschwenkbeweglichen zweiten Teilstück 10 zuordnet. Die Krümmerverlängerung 8 mit einem verschwenkbeweglichen zweiten Teilstück 10 weist gegenüber einer Krümmerverlängerung die kein verschwenkbewegliches Teilstück 10 umfasst die vorstehend näher beschriebenen ersten und zweiten Sensoren 53, 54 auf. Der erste und zweite Sensor 53, 54 werden von einer allgemein bekannten und hier nicht näher erläuterten Zentralelektrik des Feldhäckslers 1 mit Spannung versorgt. Der erste und zweite Sensor 53, 54 sind über die Kabelanordnung 49 in signalübertagender Weise mit der Steuerungseinrichtung 48 verbunden. Die von dem ersten und zweiten Sensor 53, 54 generierten Sensorsignale werden von der Steuerungseinrichtung 48 ausgewertet. Bei einer Krümmerverlängerung ohne ein verschwenkbewegliches zweites Teilstück 10 sind die Sensoren 53, 54 nicht vorhanden. Das Spannungssignal der Zentralelektrik wird in diesem Fall über die Steckverbindung 52 direkt an die Steuereinheit 48 übertragen. Dieses Spannungssignal unterscheidet sich von dem Spannungssignal der Sensoren 53, 54, sodass die Steuerungseinrichtung 48 anhand des Spannungssignals das verschwenkbewegliche zweite Teilstück 10 erkennt. Beim Identifizieren eines verschwenkbeweglichen zweiten Teilstück 10 stellt die Steuerungseinrichtung 48 dem Bediener des Feldhäckslers 1 die entsprechenden Funktionen zum Ein- bzw. Ausklappen der Krümmerverlängerung 8 bereit.

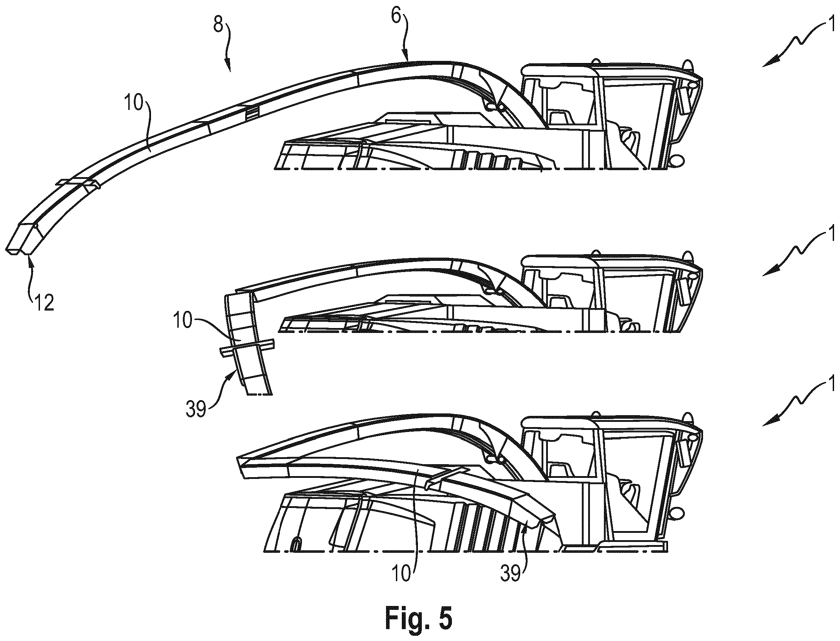

Fig. 5 zeigt den Feldhäcksler 1 mit der Krümmerverlängerung 8. Die Schwenkbewegung des zweiten Teilstücks 10 von der eingeklappten Stellung 13 hin zu der ausgeklappten Stellung 12 ist durch unterschiedliche Zwischenstellungen 39 des zweiten Teilstücks 10 dargestellt. Die zweite Achse A2 ist gegenüber einer Ebene, in der das erste und zweite Teilstück 9, 10 stirnseitig in der ausgeklappten Stellung 12 eine Kontaktfläche aufweisen, wobei die Kontaktfläche in der Ebene liegt, geneigt ausgebildet. Hierdurch wird bewirkt, dass das zweite Teilstück 10 in der in Fig. 2 gezeigten eingeklappten Stellung 13 dem Maschinengehäuse 2 angenähert ist und insbesondere sich in einer tieferen Stellung als das erste Teilstück 9 befindet.

**Bezugszeichenliste:**

| | | | |
|---|---|---|---|
| 1 | Feldhäcksler | 32 | Seitenwand |
| 1a | Frontseite | 33 | Öse |
| 1b | Heckseite | 34 | Zweite Gelenk |
| 2 | Maschinengehäuse | 35 | Dritte Gelenk |
| 3 | Räder | 36 | Erste Hebel |
| 4 | Fahrerkabine | 37 | Zweite Hebel |
| 5 | Drehkranz | 38 | Vierte Gelenk |
| 6 | Auswurfkrümmer | 39 | Zwischenstellung |
| 7 | Krümmerstutzen | 40 | Kolbenzylindereinheit |
| 8 | Krümmerverlängerung | 41 | Ablageposition |
| 9 | Erste Teilstück | 42 | Ernteposition |
| 10 | Zweite Teilstück | 43 | Faltposition |
| 11 | Erstes Gelenk | 44 | Abstützelemente |
| 12 | Ausgeklappte Stellung | 45 | Ernteposition |
| 13 | Eingeklappte Stellung | 46 | Betätigungsmittel |
| 14 | Aktor | 47 | Neigungssensor |
| 15 | Ablagebock | 48 | Steuerungseinrichtung |
| 16 | Strebe | 49 | Kabelanordnung |
| 17 | Stirnseite | 50 | Erster Kabelsatz |
| 18 | Ebene | 51 | Zweiter Kabelsatz |
| 19 | Kontaktfläche | 52 | Steckverbindung |
| 20 | Flansch | 53 | Erste Sensor |
| 21 | Flansch | 54 | Zweite Sensor |
| 22 | Winkel | 55 | Betätigungsmittel |
| 23 | Scheitelpunkt | 56 | Neigungssensor |
| 24 | Oberseite | | |
| 25 | Winkelfeld | | |
| 26 | Unterseite | | |
| 27 | Ablagebock | A | Ausschnitt |
| 28 | Strebe | A1 | Erste Achse |
| 29 | Erste Montageplatte | A2 | Zweite Achse |
| 30 | Zweite Montageplatte | A3 | Dritte Achse |
| 31 | Seitenwand | FR | Fahrtrichtung |

## Patentansprüche

1. Feldhäcksler (1) mit einem Auswurfkrümmer (6), wobei der Auswurfkrümmer (6) einen an dem Feldhäcksler (1) um eine erste Achse (A1) verschwenkbeweglich angeordneten Krümmerstutzen (7) und eine an dem Krümmerstutzen (7) angeordnete erste Krümmerverlängerung (8) umfasst, wobei die erste Krümmerverlängerung (8) ein erstes Teilstück (9) und ein an dem ersten Teilstück (9) um eine zweite Achse (A2) verschwenkbeweglich angeordnetes zweites Teilstück (10) umfasst, wobei in einer ausgeklappten Stellung (12) das zweite Teilstück (10) eine Längenfortsetzung des ersten Teilstücks (9) bildet, wobei eine Kontaktfläche (19) des ersten und zweiten Teilstücks (9, 10) in einer Ebene (18) liegt,
**dadurch gekennzeichnet, dass**
die zweite Achse (A2) in einem Winkel (22) geneigt gegenüber der Ebene (18) ausgebildet ist.

2. Feldhäcksler (1) nach Anspruch 1, **dadurch gekennzeichnet, dass** das zweite Teilstück (10) von der ausgeklappten Stellung (12) um die zweite Achse (A2) hin zu einer eingeklappten Stellung (13) verschwenkbeweglich ist, wobei das zweite Teilstück (10) in der eingeklappten Stellung (13) sich längsseits neben dem ersten Teilstück (9) befindet.

3. Feldhäcksler (1) nach einem der Ansprüche 1 bis 2, **dadurch gekennzeichnet, dass** die Neigung des Winkels (22) eine niedrigere Position des freien Endes des zweiten Teilstücks (10) in der eingeklappten Stellung (13) bewirkt.

4. Feldhäcksler (1) nach einem der Ansprüche 1 bis 3, **dadurch gekennzeichnet, dass** der Scheitelpunkt (23) des Winkels (22) sich an der Oberseite (24) des Auswurfkrümmers (6) befindet, wobei sich ein zwischen der zweiten Achse (A2) und der Ebene (18) ausbildendes Winkelfeld (25) in Richtung der Unterseite (26) des Auswurfkrümmers (6) erstreckt und ausgehend von der Ebene (18) in Richtung des zweiten Teilstücks (10) erstreckt.

5. Feldhäcksler (1) nach einem der Ansprüche 1 bis 4, **dadurch gekennzeichnet, dass** der Winkel (22) größer als 1 Grad und kleiner als 5 Grad ist.

6. Feldhäcksler (1) nach einem der Ansprüche 1 bis 5, **dadurch gekennzeichnet, dass** eine erste Montageplatte (29) an dem ersten Teilstück (9) und eine zweite Montageplatte (30) an dem zweiten Teilstück (10) angeordnet sind, wobei die erste und zweite Montageplatte (29, 30) mit einem ersten Gelenk (11) verbunden sind, wobei das erste Gelenk (11) die zweite Achse (A2) zum Verschwenken des zweiten Teilstücks (10) ausbildet.

7. Feldhäcksler (1) nach Anspruch 6, **dadurch gekennzeichnet, dass** an dem ersten Gelenk (11) eine Öse (33) angeordnet ist.

8. Feldhäcksler (1) nach einem der Ansprüche 1 bis 7, **dadurch gekennzeichnet, dass** der Auswurfkrümmer (6) ein rechteckiges Profil aufweist, wobei das erste und zweite Teilstück (9, 10) jeweils an ihrer Stirnseite einen Flansch (20, 21) aufweisen, wobei in der ausgeklappten Stellung (12) die jeweiligen Flansche (20, 21) eine in der Ebene (18) liegende Kontaktfläche (19) des ersten und zweiten Teilstücks (9, 10) ausbilden.

9. Verfahren zum Falten eines Auswurfkrümmers (6) eines Feldhäckslers (1), wobei der Auswurfkrümmer (6) einen an dem Feldhäcksler (1) um eine erste Achse (A1) verschwenkbeweglich angeordneten Krümmerstutzen (7) und eine an dem Krümmerstutzen (7) angeordnete Krümmerverlängerung (8) umfasst, wobei die Krümmerverlängerung (8) ein erstes Teilstück (9) und ein an dem ersten Teilstück (9) um eine zweite Achse (A2) verschwenkbeweglich angeordnetes zweites Teilstück (10) umfasst, wobei der Auswurfkrümmer (6) zwischen einer Ablageposition (41) und einer Ernteposition (42) verfahrbar ist,
**dadurch gekennzeichnet, dass**
eine zwischen der Ablageposition (41) und der Ernteposition (42) befindliche Faltposition (43) vorgesehen ist, wobei in der Faltposition (43) die Krümmerverlängerung (8) von einer eingeklappten Stellung (13) in eine ausgeklappte Stellung (12) oder von der ausgeklappten Stellung (12) in die eingeklappte Stellung (13) verfahren wird, wobei der Feldhäcksler (1) nach einem der Ansprüche 1 bis 8 ausgebildet ist.

10. Verfahren zum Falten eines Auswurfkrümmers (6) nach Anspruch 9, **dadurch gekennzeichnet, dass** die zweite Achse (A2) sich in der Faltposition (43) in vertikaler Richtung erstreckt.

11. Verfahren zum Falten eines Auswurfkrümmers (6) nach einem der Ansprüche 9 bis 10, **dadurch gekennzeichnet, dass** der Feldhäcksler (1) einen Ablagebock (15) zum Abstützen des Auswurfkrümmers (6) in der Ablageposition (41) umfasst, wobei sich der Auswurfkrümmer (6) in der Faltposition (43) oberhalb des Ablagebocks (15) befindet, wobei vorzugsweise der Krümmerstutzen (7) in der Faltposition (43) im Wesentlichen parallel zur Vorwärtsfahrtrichtung (FR) des Feldhäckslers (1) ausgerichtet ist.

12. Verfahren zum Falten eines Auswurfkrümmers (6) nach einem der Ansprüche 9 bis 11, **dadurch gekennzeichnet, dass** ein Betätigungsmittel (46), insbesondere ein Schaltelement, vorgesehen ist, wobei mittels des Betätigungsmittels (46) eine Automatikfunktion zum automatischen Verschwenken des Auswurfkrümmers (6) betätigbar ist.

13. Verfahren zum Falten eines Auswurfkrümmers (6) nach Anspruch 12, **dadurch gekennzeichnet, dass** die Automatikfunktion zum Verfahren des Auswurfkrümmers (6) von der Ernteposition (42) hin zu der Ablageposition (41) die folgenden Verfahrensschritte umfasst:
a) Verfahren des Auswurfkrümmers (6) in eine oberhalb eines Ablagebocks (27) befindliche Position,
b) Absenken des Auswurfkrümmers (6) in die Faltposition (43),
c) Verschwenken der Krümmerverlängerung (8) von einer ausgeklappten Stellung (12) in eine eingeklappte Stellung (13), wobei vorzugsweise während des Verschwenkens der Krümmerverlängerung (8) eine am freien Ende der Krümmerverlängerung (8) befindliche Auswurfklappe in eine für die Ablageposition (41) des Auswurfkrümmers (6) vorgesehene Stellung verfahren wird,
d) Absenken des Auswurfkrümmers (6) in die Ablageposition (41), wobei der Auswurfkrümmer (6) auf dem Ablagebock (27) positioniert wird, wobei vorzugsweise der Auswurfkrümmer (6) angewinkelt zur Vorwärtsfahrtrichtung (FR) auf dem Ablagebock (27) positioniert wird.

14. Verfahren zum Falten eines Auswurfkrümmers (6) nach einem der Ansprüche 12 bis 13, **dadurch gekennzeichnet, dass** die Automatikfunktion zum Verfahren des Auswurfkrümmers (6) von der Ablageposition (41) hin zu der Ernteposition (42) die Verfahrensschritte
1) Anheben des Auswurfkrümmers (6) in die Faltposition (43),
2) Verschwenken der Krümmerverlängerung (8) von der eingeklappten Stellung (13) in eine ausgeklappte Stellung (12), wobei vorzugsweise während des Verschwenkens der Krümmerverlängerung (8) die am freien Ende der Krümmerverlängerung (8) befindliche Auswurfklappe in eine für die Ernteposition (42) des Auswurfkrümmers (6) vorgesehen Stellung verfahren wird,
3) Anheben des Auswurfkrümmers (6) in die Ernteposition (42).

15. Verfahren zum Falten eines Auswurfkrümmers (6) nach einem der Ansprüche 12 bis 14, **dadurch gekennzeichnet, dass** die Automatikfunktion durch Tippen des Betätigungsmittels (46) betätigt wird.

16. Verfahren zum Falten eines Auswurfkrümmers (6) nach einem der Ansprüche 12 bis 15, **dadurch gekennzeichnet, dass** das Betätigungsmittel (46) zusätzlich zum manuellen Verschwenken der Krümmerverlängerung (8) um die zweite Achse (A2) vorgesehen und eingerichtet ist, wobei durch halten des Betätigungsmittels (46) die Krümmerverlängerung (8) manuell verschwenkt wird.

17. Verfahren zum Falten eines Auswurfkrümmers (6) nach einem der Ansprüche 9 bis 17, **dadurch gekennzeichnet, dass** der Feldhäcksler (1) einen Neigungssensor (47) umfasst, wobei die Faltposition (43) in Abhängigkeit einer Neigung des Feldhäckslers (1) ermittelt wird.

18. Verfahren zum Falten eines Auswurfkrümmers (6) nach einem der Ansprüche 9 bis 17, **dadurch gekennzeichnet, dass** der Auswurfkrümmer (6) zumindest einen ersten Sensor (53) und einen zweiten Sensor (54) zum Identifizieren der Stellung der Krümmerverlängerung (8) umfasst, wobei vorzugsweise die eingeklappte Stellung (13) der Krümmerverlängerung (8) mittels des ersten Sensors (53) und die ausgeklappte Stellung (12) mittels des zweiten Sensors (54) identifiziert wird, wobei der Feldhäcksler (1) eine Steuerungseinrichtung (16) umfasst, wobei die Steuerungseinrichtung (48) zum Identifizieren der an dem Krümmerstutzen (7) montierten Krümmerverlängerung (8) mit einem verschwenkbeweglichen zweiten Teilstück (10) vorgesehen und eingerichtet ist, wobei vorzugsweise die Steuerungseinrichtung (48) den ersten und/oder zweiten Sensor (53, 54) mittels eines Spannungssignals identifiziert und diesem einer Krümmerverlängerung (8) mit einem verschwenkbeweglichen zweiten Teilstück (10) zuordnet.

## Claims

1. A forage harvester (1) with a discharge spout (6), wherein the discharge spout (6) comprises a spout connecting piece (7) which is pivotably disposed on the forage harvester (1) about a first axis (A1) and a first spout extension (8) which is disposed on the spout connecting piece (7), wherein the first spout extension (8) comprises a first section (9) and a second section (10) which is pivotably disposed on the first section (9) about a second axis (A2), wherein, in a deployed position (12), the second section (10) forms a longitudinal extension of the first section (9), wherein a contact surface (19) of the first and second sections (9, 10) lies in a plane (18),
**characterized in that**
the second axis (A2) is inclined at an angle (22) with respect to the plane (18).

2. The forage harvester (1) according to claim 1, **characterized in that** the second section (10) is pivotable about the second axis (A2) from the deployed position (12) to a retracted position (13), wherein, in the retracted position (13), the second section (10) is positioned alongside the first section (9).

3. The forage harvester (1) according to one of claims 1 to 2, **characterized in that** the inclination of the angle (22) causes the free end of the second section (10) to be in a lower position when in the retracted position (13).

4. The forage harvester (1) according to one of claims 1 to 3, **characterized in that** the apex of the angle (22) is located at the upper side (24) of the discharge spout (6), wherein an angular field (25) formed between the second axis (A2) and the plane (18) extends in the direction of the lower side (26) of the discharge spout (6) and in the direction of the second section (10) starting from the plane (18).

5. The forage harvester (1) according to one of claims 1 to 4, **characterized in that** the angle (22) is greater than 1 degree and less than 5 degrees.

6. The forage harvester (1) according to one of claims 1 to 5, **characterized in that** a first mounting plate (29) is disposed on the first section (9) and a second mounting plate (30) is disposed on the second section (10), wherein the first and second mounting plates (29, 30) are connected with a first joint (11), wherein the first joint (11) forms the second axis (A2) for pivoting the second section (10).

7. The forage harvester (1) according to claim 6, **characterized in that** an eyelet (33) is disposed on the first joint (11).

8. The forage harvester (1) according to one of claims 1 to 7, **characterized in that** the discharge spout (6) has a rectangular profile, wherein the end faces of the first and second sections (9, 10) have a respective flange (20, 21) wherein, in the deployed position (12), the respective flanges (20, 21) form a contact surface (19) of the first and second sections (9, 10) which lies in the plane (18).

9. A method for folding a discharge spout (6) of a forage harvester (1), wherein the discharge spout (6) comprises a spout connecting piece (7) which is pivotably disposed on the forage harvester (1) about a first axis (A1) and a spout extension (8) which is disposed on the spout connecting piece (7), wherein the spout extension (8) comprises a first section (9) and a second section (10) which is pivotably disposed on the first section (9) about a second axis (A2), wherein the discharge spout (6) can be moved between a stowed position (41) and a harvesting position (42),
**characterized in that**
a folded position (43) is provided between the stowed position (41) and the harvesting position (42), wherein in the folded position (43), the spout extension (8) is moved from a retracted position (13) into a deployed position (12) or from the deployed position (12) into the retracted position (13), wherein the forage harvester (1) is constructed in accordance with one of claims 1 to 8.

10. The method for folding a discharge spout (6) according to claim 9, **characterized in that** the second axis (A2) extends in the vertical direction in the folded position (43).

11. The method for folding a discharge spout (6) according to one of claims 9 to 10, **characterized in that** the forage harvester (1) comprises a stowing rack (15) for supporting the discharge spout (6) in the stowed position (41), wherein in the folded position (43), the discharge spout (6) is located above the stowing rack (15), wherein preferably, in the folded position (43), the spout connecting piece (7) is orientated substantially parallel to the forward direction of travel (FR) of the forage harvester (1).

12. The method for folding a discharge spout (6) according to one of claims 9 to 11, **characterized in that** an actuating means (46), in particular a switching element, is provided, wherein an automatic function for automatically pivoting the discharge spout (6) can be actuated by means of the actuating means (46).

13. The method for folding a discharge spout (6) according to claim 12, **characterized in that** the automatic function for moving the discharge spout (6) from the harvesting position (42) to the stowed position (41) comprises the following method steps:
a) moving the discharge spout (6) into a position located above a stowing rack (27);
b) lowering the discharge spout (6) into the folded position (43);
c) pivoting the spout extension (8) from a deployed position (12) into a retracted position (13), wherein preferably, during the pivoting of the spout extension (8), a discharge flap located at the free end of the spout extension (8) is moved into a position intended for the stowed position (41) of the discharge spout (6),
d) lowering the discharge spout (6) into the stowed position (41), wherein the discharge spout (6) is positioned on the stowing rack (27), wherein preferably, the discharge spout (6) is positioned on the stowing rack (27) at an angle to the forward direction of travel (FR).

14. The method for folding a discharge spout (6) according to one of claims 12 to 13, **characterized in that** the automatic function for moving the discharge spout (6) from the stowed position (41) to the harvesting position (42) comprises the method steps of:
1) lifting the discharge spout (6) into the folded position (43);
2) pivoting the spout extension (8) from the retracted position (13) into a deployed position (12), wherein preferably, during the pivoting of the spout extension (8), the discharge flap located at the free end of the spout extension (8) is moved into a position intended for the harvesting position (42) of the discharge spout (6),
3) lifting the discharge spout (6) into the harvesting position (42).

15. The method for folding a discharge spout (6) according to one of claims 12 to 14, **characterized in that** the automatic function is actuated by tapping the actuating means (46).

16. The method for folding a discharge spout (6) according to one of claims 12 to 15, **characterized in that** the actuating means (46) is additionally provided and configured for manual pivoting of the spout extension (8) about the second axis (A2), wherein the spout extension (8) is manually pivoted by holding the actuating means (46).

17. The method for folding a discharge spout (6) according to one of claims 9 to 17, **characterized in that** the forage harvester (1) comprises an inclination sensor (47), wherein the folded position (43) is determined as a function of an inclination of the forage harvester (1).

18. The method for folding a discharge spout (6) according to one of claims 9 to 17, **characterized in that** the discharge spout (6) comprises at least a first sensor (53) and a second sensor (54) for identifying the position of the spout extension (8), wherein preferably, the retracted position (13) of the spout extension (8) is identified by means of the first sensor (53) and the deployed position (12) is identified by means of the second sensor (54), wherein the forage harvester (1) comprises a control device (16), wherein the control device (48) is provided and configured for identifying the spout extension (8) having a pivotable second section (10) mounted on the spout connecting piece (7), wherein preferably, the control device (48) identifies the first and/or second sensor (53, 54) by means of a voltage signal and associates it with a spout extension (8) having a pivotable second section (10).

## Revendications

1. Ramasseuse-hacheuse (1) comprenant une goulotte (6), la goulotte (6) comprenant un raccord de goulotte (7), disposé sur la ramasseuse-hacheuse (1) avec possibilité de pivotement autour d'un premier axe (A1), et un premier prolongement de goulotte (8) disposé sur le raccord de goulotte (7), le premier prolongement de goulotte (8) comprenant un premier tronçon (9) et un deuxième tronçon (10) disposé sur le premier tronçon (9) avec possibilité de pivotement autour d'un deuxième axe (A2), sachant que dans une position déployée (12), le deuxième tronçon (10) forme un prolongement en longueur du premier tronçon (9), une surface de contact (19) du premier et du deuxième tronçon (9, 10) se situant dans un plan (18),
**caractérisée en ce que**
le deuxième axe (A2) est réalisé en étant incliné sous un angle (22) par rapport au plan (18).

2. Ramasseuse-hacheuse (1) selon la revendication 1, **caractérisée en ce que** le deuxième tronçon (10) peut être déplacé par pivotement autour du deuxième axe (A2), de la position déployée (12) vers une position repliée (13), le deuxième tronçon (10) se trouvant sur le côté longitudinal à côté du premier tronçon (9), lorsqu'il occupe la position repliée (13).

3. Ramasseuse-hacheuse (1) selon une des revendications 1 à 2, **caractérisée en ce que** l'inclinaison de l'angle (22) a pour effet que l'extrémité libre du deuxième tronçon (10) occupe une position plus basse dans la position repliée (13).

4. Ramasseuse-hacheuse (1) selon une des revendications 1 à 3, **caractérisée en ce que** le sommet (23) de l'angle (22) se situe sur la face supérieure (24) de la goulotte (6), où un champ angulaire (25) qui se forme entre le deuxième axe (A2) et le plan (18) s'étend en direction de la face inférieure (26) de la goulotte (6) et s'étend en direction du deuxième tronçon (10) en partant du plan (18).

5. Ramasseuse-hacheuse (1) selon une des revendications 1 à 4, **caractérisée en ce que** l'angle (22) est supérieur à 1 degré et inférieur à 5 degrés.

6. Ramasseuse-hacheuse (1) selon une des revendications 1 à 5, **caractérisée en ce qu'**une première plaque de montage (29) est disposée sur le premier tronçon (9) et une deuxième plaque de montage (30) est disposée sur le deuxième tronçon (10), les première et deuxième plaques de montage (29, 30) étant reliées à une première articulation (11), où la première articulation (11) constitue le deuxième axe (A2) pour le pivotement du deuxième tronçon (10).

7. Ramasseuse-hacheuse (1) selon la revendication 6, **caractérisée en ce qu'**un œillet (33) est disposé sur la première articulation (11).

8. Ramasseuse-hacheuse (1) selon une des revendications 1 à 7, **caractérisée en ce que** la goulotte (6) présente un profil rectangulaire, le premier et le deuxième tronçon (9, 10) présentant chacun une flasque (20, 21) sur leur face frontale, sachant que dans la position déployée (12), les flasques (20, 21) respectives forment une surface de contact (19) du premier et du deuxième tronçon (9, 10) située dans le plan (18).

9. Procédé de pliage d'une goulotte (6) d'une ramasseuse-hacheuse (1), la goulotte (6) comprenant un raccord de goulotte (7), disposé sur la ramasseuse-hacheuse (1) avec possibilité de pivotement autour d'un premier axe (A1), et un prolongement de goulotte (8) disposé sur le raccord de goulotte (7), le prolongement de goulotte (8) comprenant un premier tronçon (9) et un deuxième tronçon (10) disposé sur le premier tronçon (9) avec possibilité de pivotement autour d'un deuxième axe (A2), la goulotte (6) pouvant être déplacée entre une position de dépôt (41) et une position de récolte (42),
**caractérisé en ce que**
il est prévu une position de pliage (43) située entre la position de dépôt (41) et la position de récolte (42), sachant que dans la position de pliage (43) le prolongement de goulotte (8) est amené d'une position repliée (13) dans une position déployée (12) ou de la position déployée (12) dans la position repliée (13), la ramasseuse-hacheuse (1) étant réalisée selon une des revendications 1 à 8.

10. Procédé de pliage d'une goulotte (6) selon la revendication 9, **caractérisé en ce que**, dans la position de pliage (43), le deuxième axe (A2) s'étend dans le sens vertical.

11. Procédé de pliage d'une goulotte (6) selon une des revendications 9 à 10, **caractérisé en ce que** la ramasseuse-hacheuse (1) comprend un bloc de dépôt (15) destiné à l'appui de la goulotte (6) dans la position de dépôt (41), la goulotte (6) se trouvant au-dessus du bloc de dépôt (15) lorsqu'elle occupe la position de pliage (43), sachant que dans la position de pliage (43), le raccord de goulotte (7) est de préférence orienté sensiblement parallèlement à la direction de marche avant (FR) de la ramasseuse-hacheuse (1).

12. Procédé de pliage d'une goulotte (6) selon une des revendications 9 à 11, **caractérisé en ce qu'**il est prévu un moyen d'actionnement (46), notamment un élément de commande, le moyen d'actionnement (46) permettant d'activer une fonction automatique pour le pivotement automatique de la goulotte (6).

13. Procédé de pliage d'une goulotte (6) selon la revendication 12, **caractérisé en ce que** la fonction automatique pour le déplacement de la goulotte (6) de la position de récolte (42) à la position de dépôt (41) comprend les étapes de procédé suivantes :
a) déplacement de la goulotte (6) dans une position située au-dessus d'un bloc de dépôt (27),
b) abaissement de la goulotte (6) jusqu'à la position de pliage (43),
c) pivotement du prolongement de goulotte (8) depuis une position déployée (12) dans une position repliée (13), sachant que pendant le pivotement du prolongement de goulotte (8), une casquette d'éjection située à l'extrémité libre du prolongement de goulotte (8) est de préférence déplacée dans une position prévue pour la position de dépôt (41) de la goulotte (6),
d) abaissement de la goulotte (6) jusqu'à la position de dépôt (41), avec positionnement de la goulotte (6) sur le bloc de dépôt (27), la goulotte (6) étant de préférence positionnée sur le bloc de dépôt (27) en formant un angle avec la direction de marche avant (FR).

14. Procédé de pliage d'une goulotte (6) selon une des revendications 12 à 13, **caractérisé en ce que** la fonction automatique pour le déplacement de la goulotte (6) de la position de dépôt (41) à la position de récolte (42) comprend les étapes de procédé suivantes :
1) levage de la goulotte (6) jusque dans la position de pliage (43),
2) pivotement du prolongement de goulotte (8) depuis la position repliée (13) dans une position déployée (12), sachant que pendant le pivotement du prolongement de goulotte (8), la casquette d'éjection située à l'extrémité libre du prolongement de goulotte (8) est de préférence déplacée dans une position prévue pour la position de récolte (42) de la goulotte (6),
3) levage de la goulotte (6) jusque dans la position de récolte (42).

15. Procédé de pliage d'une goulotte (6) selon une des revendications 12 à 14, **caractérisé en ce que** la fonction automatique est activée par effleurement du moyen d'actionnement (46).

16. Procédé de pliage d'une goulotte (6) selon une des revendications 12 à 15, **caractérisé en ce que** le moyen d'actionnement (46) est en outre prévu et agencé pour le pivotement manuel du prolongement de goulotte (8) autour du deuxième axe (A2), le maintien du moyen d'actionnement (46) ayant pour effet le pivotement manuel du prolongement de goulotte (8).

17. Procédé de pliage d'une goulotte (6) selon une des revendications 9 à 17, **caractérisé en ce que** la ramasseuse-hacheuse (1) comprend un capteur d'inclinaison (47), la position de pliage (43) étant déterminée en fonction d'une inclinaison de la ramasseuse-hacheuse (1).

18. Procédé de pliage d'une goulotte (6) selon une des revendications 9 à 17, **caractérisé en ce que** la goulotte (6) comprend au moins un premier capteur (53) et un deuxième capteur (54) pour l'identification de la position du prolongement de goulotte (8), la position repliée (13) du prolongement de goulotte (8) étant identifiée de préférence par le premier capteur (53) et la position déployée (12) par le deuxième capteur (54), la ramasseuse-hacheuse (1) comprenant un dispositif de commande (16), le dispositif de commande (48) étant prévu et agencé pour l'identification du prolongement de goulotte (8) monté sur le raccord de goulotte (7) et doté d'un deuxième tronçon (10) pivotant, le dispositif de commande (48) identifiant le premier et/ou le deuxième capteur (53, 54) de préférence à l'aide d'un signal de tension et associant à celui-ci un prolongement de goulotte (8) doté d'un deuxième tronçon (10) pivotant.
